# EUROPÄISCHE PATENTSCHRIFT

(11) **EP 4 464 643 B1**
(45) Veröffentlichungstag und Bekanntmachung des Hinweises auf die Patenterteilung: **22.07.2026**
(21) Anmeldenummer: 23173603.4
(22) Anmeldetag: 16.05.2023
(51) Int. Cl.: B66F 9/075, B66F 9/24, B66F 17/00

(54) **VERFAHREN ZUR HINDERNISBEHANDLUNG IN EINEM FLURFÖRDERZEUG**
METHOD FOR TREATING OBSTACLES IN AN INDUSTRIAL TRUCK
PROCÉDÉ DE TRAITEMENT D'OBSTACLES DANS UN CHARIOT DE MANUTENTION

(43) Veröffentlichungstag der Anmeldung: 20.11.2024
(73) Patentinhaber: Jungheinrich Aktiengesellschaft, 22047 Hamburg (DE)
(72) Erfinder: QUICKERT, Steffen, 27793 Wildeshausen (DE); ALTMANN, Tony, 24616 Brokstedt (DE)
(74) Vertreter: Weickmann & Weickmann PartmbB

(56) Entgegenhaltungen:
- CN-A- 113 031 581
- US-A1- 2022 185 171
- US-A1- 2022 390 955

## Beschreibung

Die vorliegende Erfindung betrifft ein Verfahren zur Hindernisbehandlung in einem Flurförderzeug, welches wenigstens eine Sensoreinheit umfasst, welche in Hauptfahrrichtung des Flurförderzeugs angeordnet und dazu eingerichtet ist, in einem vorbestimmen Winkelbereich Hindernisse erfassen zu können, sowie ein Flurförderzeug, welches dazu eingerichtet ist, ein derartiges Verfahren während seines Betriebs auszuführen.

Im regulären Einsatz von Transportvorrichtungen in Logistikeinrichtungen kann es gerade in Stoßzeiten vermehrt zu Kollisionen zwischen Flurförderzeugen und Lagerausstattung, Flurförderzeugen und weiteren Fahrzeugen oder Flurförderzeugen und Personen kommen. Ein Ansatz, um derartigen Kollisionen entgegenzuwirken, kann darin bestehen, auf ein funkbasiertes System zurückzugreifen, mit welchem die Flurförderzeuge über das Vorliegen von Hindernissen informiert werden. Hierbei zeigt es sich jedoch, dass die aktuell verwendete Sensorik zu unnötigen Abbremsungen und damit zu einer Einschränkung der Leistungsfähigkeit derartiger Fahrzeuge führt.

Um ferner auch Objekte und Personen ohne derartige Funkausrüstung in das Schutzkonzept mit einbeziehen zu können, ist es bekannt, Sensoreinheiten in Flurförderzeugen zum Einsatz zu bringen, welche eine Umgebung davon auf Hindernisse überprüfen und insbesondere in der Hauptfahrrichtung an dem Flurförderzeug montiert und ausgerichtet sein können. Hierbei werden durch die entsprechenden Sensoreinheiten sogenannte Schutzfelder aufgespannt, welche häufig in horizontalen Ebenen knapp oberhalb des Fahruntergrunds liegen und welche hinsichtlich ihrer Abmessungen und Ausrichtungen teilweise an den momentanen Fahrzustand des Flurförderzeugs angepasst werden können, beispielsweise hinsichtlich ihrer Ausrichtung an einen momentanen Lenkwinkel und hinsichtlich ihrer Länge an eine momentane Geschwindigkeit des Fahrzeugs, um in jedem Fall ein kontrolliertes Abbremsen zu ermöglichen, wenn ein Hindernis in einer derartigen Schutzzone erfasst wird.

Ein Beispiel für ein derartiges Vorgehen ist aus der US 2022/185171 A1 bekannt, wie im Oberbegriff des Anspruchs 1 definiert. Ähnliche Verfahren sind ebenfalls aus der CN 113 031 581 A und der US 2022/390955 A1 bekannt.

Wird somit durch eine solche Sensoreinheit ein Objekt erkannt, so kann eine entsprechende Information erzeugt und/oder eine Fahrzeugreaktion bzw. Maßnahme ausgelöst werden. Hierbei ist selbstverständlich erwünscht, dass ein entsprechendes Fahrzeug nur dann eine Reaktion ausführt oder eine Maßnahme eingeleitet wird, wenn eine Kollision in der Tat möglich und wahrscheinlich ist, d.h., wenn sich ein Hindernis im vorgesehenen Bewegungsbereich des Fahrzeugs befindet. Zu diesem Zweck wird die angesprochene Schutzzone wie bereits angesprochen von einem momentanen Lenkwinkel oder einer momentanen Fahrtrichtung des entsprechenden Flurförderzeugs abhängen, da gerade durch diese Parameter der in Kürze befahrene Bereich des Fahruntergrunds festgelegt ist.

Dementsprechend wird bei bekannten Systemen zur Hindernisbehandlung in Flurförderzeugen mit Hilfe des durch eine entsprechende Sensoreinheit bestimmten Lenkwinkels sowie der bekannten aktuellen Geschwindigkeit des Fahrzeugs der zukünftige Fahrweg für eine bestimmte Zeitspanne vorherberechnet und hinsichtlich eines Vorliegens eines Hindernisses ausgewertet. Befindet sich in diesem Fahrweg ein Hindernis, so löst das System die entsprechende vorbestimmte Reaktion oder Maßnahme aus.

Hierbei besteht jedoch insbesondere bei personengeführten Flurförderzeugen das Problem, dass es in gewissen Fahrsituationen von der Bedienperson gewünscht sein kann, bis zu einer gewissen Distanz zunächst einmal auf ein Hindernis zuzufahren, jedoch in einer kontrollierten Weise vor einer Kollision von dem Hindernis abzudrehen bzw. die Fahrtrichtung des Fahrzeugs in einer Weise zu ändern, die zwar eine Annäherung an das Hindernis bedeutet, jedoch letztlich dennoch ein planmäßiges und ungefährliches Verhalten des Fahrzeugs darstellt.

Ein Beispiel hierfür kann unter anderem in einer Einfahrt eines solchen Flurförderzeugs in einen Gang, beispielsweise einen Regalgang, liegen, wobei bei der entsprechenden Kurvenfahrt zum Einfahren in den Gang bei einer reinen Extrapolation der Kurvenfahrt in die Zukunft das innenliegende Regal als Hindernis erkannt werden wird und dementsprechend das Kollisionsvermeidungssystem ausgelöst wird, obwohl die Situation von der Bedienperson erwünscht und unter Kontrolle ist und demzufolge unter normalen Umständen keine Gefahr besteht. Vielmehr ist davon auszugehen, dass bei einem solchen Manöver die Bedienperson des Flurförderzeugs die Lenkung rechtzeitig korrigieren wird, beispielsweise geradestellen wird, sobald das Fahrzeug auf eine Bahnkurve parallel zu den beiden Seiten des Ganges eingebogen ist, wenngleich während der eigentlichen Kurvenfahrt bzw. des Einbiegens in den Gang der vorberechnete Fahrweg des Flurförderzeugs wenigstens zeitweise in die Regalwand hineinragen wird.

Um nun in derartigen Situationen ein Auslösen falsch positiver Gefahrenerkennungen und ein entsprechendes Auslösen von Gegenmaßnahmen zu vermeiden, welche die Bedienperson des Fahrzeugs bei dem Ausführen ihrer Tätigkeit beeinträchtigen oder irritieren könnten, besteht ein Bedarf, derartige Betriebssituationen zuverlässig zu erkennen und ein Verfahren bereitzustellen, mit welchem entsprechende vorbestimmte Maßnahmen zur Kollisionsverhinderung bzw. Hindernisbehandlung lediglich in Situationen ausgelöst werden, in welchen davon ausgegangen wird, dass eine Bedienperson das Flurförderzeug nicht in der vorgesehenen Weise unter Kontrolle hat bzw. ein gefährliches Fahrmanöver in der Nähe eines Hindernisses durchführt.

Zur Lösung der eben genannten Aufgabe und zur Bereitstellung eines Kollisionsvermeidungssystems bzw. eines Verfahrens zur Hindernisbehandlung, welche in der Tat nur in kritischen Situationen eingreifen bzw. vorbestimmte Maßnahmen auslösen, ist zunächst einmal erfindungsgemäß ein derartiges Verfahren vorgeschlagen, umfassend ein Erfassen einer momentanen Geschwindigkeit und eines momentanen Lenkwinkels nach rechts oder links von wenigstens einem gelenkten Rad des Flurförderzeugs mittels eines Geschwindigkeitssensors bzw. eines Lenkwinkelsensors des Flurförderzeugs, eines Berechnen einer Schutzzone anhand der momentanen Geschwindigkeit und des momentanen Lenkwinkels, eines Auswertens der von der wenigstens einen Sensoreinheit gelieferten Daten innerhalb der Schutzzone des Flurförderzeugs, und bei einem Feststellen eines Hindernisses in der Schutzzone eines Ermittelns einer jeweiligen rechten und einer linken Lenkwinkeldifferenz zu dem momentanen Lenkwinkel, mittels welcher dem Hindernis jeweils ausgewichen werden kann, oder eines Ermittelns einer rechten oder linken Lenkwinkeldifferenz zu dem momentanen Lenkwinkel, mittels welcher dem Hindernis ausgewichen werden kann, in Richtung der Geradeausfahrrichtung, je nachdem ob ein momentaner Lenkwinkel nach links oder rechts vorliegt, , und eines Unterdrückens wenigstens einer vorbestimmten Maßnahme, wenn ein momentaner Lenkwinkel nach rechts vorliegt und der momentane Lenkwinkel nach rechts größer oder gleich der linken Lenkwinkeldifferenz ist, oder ein momentaner Lenkwinkel nach links vorliegt und der momentane Lenkwinkel nach links größer oder gleich der rechten Lenkwinkeldifferenz ist, wobei ansonsten die wenigstens eine vorbestimmte Maßnahme ausgelöst wird.

Zudem kann das Verfahren ein Bewerten umfassen, ob ein möglicher freier Fahrweg rechts oder links an dem Hindernis vorbei vorliegt, anhand der momentanen Geschwindigkeit und einer vorbestimmten Zeitspanne, wobei die vorbestimmte Maßnahme dann nur unterdrückt wird, wenn zusätzlich zu den oben genannten Bedingungen bei einem momentanen Lenkwinkel nach rechts zusätzlich ein linker freier Fahrweg vorliegt bzw. wenn bei einem momentanen Lenkwinkel nach links zusätzlich ein rechter frier Fahrweg vorliegt.

Dementsprechend werden erfindungsgemäß bei einem Auftreten eines Hindernisses in der anhand der momentanen Geschwindigkeit und des momentanen Lenkwinkels des Fahrzeugs festgelegten Schutzzone rechts und links neben dem Hindernis alternative Fahrwege gesucht, welche jeweils einer Kurvenfahrt mit einem konstanten Lenkwinkel entsprechen. In diesem Zusammenhang entspricht die Schutzzone zunächst einmal einem projizierten Fahrweg des Flurförderzeugs anhand der momentanen Geschwindigkeit und des momentanen Lenkwinkels für eine vorbestimmte Zeit und es kann ebenfalls gefordert werden, dass ein möglicher freier Fahrweg eine bestimmte Länge haben muss, welche ebenfalls von der momentanen Geschwindigkeit und dementsprechend der einer vorbestimmten Zeitspanne abhängt. In diesem Zusammenhang sei ferner darauf hingewiesen, dass als Geschwindigkeitssensor unter anderen auch ein Raddrehzahl-Sensor zum Einsatz kommen kann oder eine beliebige andere geeignete Vorrichtung.

Weiterhin werden mit den rechten und linken Lenkwinkeldifferenzen minimale Lenkwinkeländerungen berechnet, die eine Bedienperson des Fahrzeugs vornehmen müsste, um an dem Hindernis vorbeifahren zu können. Dementsprechend wirken die beiden Lenkwinkeldifferenzen nach rechts und nach links sowie die Information, ob ein freier Fahrweg gefunden worden ist, als Eingangsgrößen zur Bestimmung, ob die wenigstens eine vorbestimmte Maßnahme unterdrückt werden soll, wenn in der Tat ein Hindernis in der Schutzzone festgestellt worden ist, wobei das Auslösen der Maßnahme zunächst einmal als Normalfall angenommen wird.

Entsprechend der auf dieser Grundlage ausgeführten Logik werden tatsächliche Gefahrensituationen von Situationen unterschieden, in welchen eine Bedienperson des Flurförderzeugs eine sichere und kontrollierte Kurvenfahrt vornimmt und es können insbesondere in einer vorteilhaften Weise Fälle behandelt werden, in welchen ein Flurförderzeug in einen Gang einbiegt und hierbei kurzzeitig die vorhergesagte Bahnkurve des Flurförderzeugs in eine seitliche Begrenzung des Gangs hineinragt, jedoch weiterhin davon ausgegangen wird, dass die Bedienperson das Fahrzeug rechtzeitig zu einer Geradeausfahrt oder ähnlichem korrigieren wird, bevor tatsächlich eine gefährliche Situation eintreten wird. Mit anderen Worten werden durch die anspruchsgemäße Logik nur diejenigen Fälle von einer Maßnahme ausgenommen, bei denen der Fahrer durch Geradeauslenken aus einer Kurvenfahrt einem erkannten Hindernis ausweichen kann. Nicht ausgenommen sind dagegen die folgenden atypische Fälle, wenn
- der Fahrer gerade auf ein Hindernis zufährt: hier kann die für das Ausweichen notwendige Lenkwinkeldifferenz nicht kleiner sein als der aktuelle Lenkwinkel, der bereits 0 ist,
- der Fahrer über das Geradelenken hinaus zu anderen Seite lenken müsste, um dem Hindernis auszuweichen
- der Fahrer stärker in die Kurve lenken müsste, um dem Hindernis auszuweichen.

Hierbei kann die wenigstens eine vorbestimmte Maßnahme ein Verringern der momentanen und/oder einer maximalen Geschwindigkeit des Flurförderzeugs umfassen. Auf diese Weise kann in einer festgestellten tatsächlichen Gefahrensituation zunächst einmal das Fahrzeug abgebremst werden, was sich automatisch auf die Abmessungen des Schutzfelds vor dem Fahrzeug niederschlagen wird, sodass auf diese Weise sichergestellt werden kann, dass das Fahrzeug in jedem Fall vor einer Kollision mit dem Hindernis zu stehen kommen wird, da letztlich bei einer vorgenommenen Verzögerung das Schutzfeld immer kürzer werden wird, bis schließlich sowohl die Geschwindigkeit als auch die Länge des Schutzfelds selbst auf null zurückgehen werden.

Alternativ oder zusätzlich kann die wenigstens eine vorbestimmte Maßnahme ein Ausgeben einer entsprechenden Mitteilung an eine Bedienperson umfassen, also beispielsweise eine akustische Warnung vor einer Gefahrensituation, oder das Ausgeben einer optischen Warnung, wie beispielsweise eines Warnhinweises durch Aufblinken einer LED oder Anzeigen einer Warnung an einen Bildschirm.

Ebenfalls wäre es denkbar, dass die wenigstens eine vorbestimmte Maßnahme einen Lenkeingriff zum Ausweichen des festgestellten Hindernisses in der Schutzzone umfassen kann, was einen direkten Eingriff in das Steuersystem des entsprechenden Flurförderzeugs voraussetzt.

Im Zusammenhang mit den eben genannten Beispielen für vorbestimmte Maßnahmen sei ferner darauf hingewiesen, dass diese ebenfalls in einer abgestuften Weise kombinierbar sein können, also dass beispielsweise bei einem notwendigen Lenkeingriff unterhalb eines vorbestimmten Schwellenwerts zunächst eine Warnung ausgegeben werden könnte und bei einem Übersteigen des Schwellenwerts ein Eingriff in die Fahrzeugsteuerung vorgenommen werden könnte, also ein automatisches Brems- und/oder Ausweichmanöver.

Weiterhin kann in dem erfindungsgemäßen Verfahren das Ermitteln der rechten und linken Lenkwinkeldifferenz und/oder das Bewerten des möglichen freien Fahrwegs ein Berücksichtigen von geometrischen Abmessungen des Flurförderzeugs und/oder einer davon getragenen Last umfassen. Auf diese Weise wird eine möglichst genaue Auswertung bzw. Bestimmung von Lenkwinkeldifferenzen und Fahrwegen vorgenommen, wobei alternativ jedoch auch eine unabhängig von den tatsächlichen Abmessungen des Flurförderzeugs definierte Kollisionszone vorausgesetzt werden könnte, welche beispielsweise zusätzliche Toleranzen oder Vereinfachungen der Fahrzeuggeometrie umfassen könnte.

Gemäß einem zweiten Aspekt betrifft die vorliegende Erfindung ein Flurförderzeug, welches dazu eingerichtet ist, ein Verfahren der eben beschriebenen Art während seines Betriebs auszuführen, umfassend einen Fahrzeugkörper, wenigstens eine Sensoreinheit, welche in Hauptfahrrichtung des Flurförderzeugs angeordnet und dazu eingerichtet ist, in einem vorbestimmtem Winkelbereich Hindernisse erfassen zu können, einen Geschwindigkeitssensor und einen Lenkwinkelsensor, und eine Steuereinheit, welche dazu eingerichtet ist, Daten von dem Geschwindigkeitssensor und dem Lenkwinkelsensor zu erhalten, eine Schutzzone zu berechnen, eine rechte und eine linke Lenkwinkeldifferenz zu dem momentanen Lenkwinkel zu ermitteln, mittels welcher einem in der Schutzzone erfassten Hindernis jeweils ausgewichen werden kann, ggf. zu bewerten, ob ein möglicher freier Fahrweg rechts oder links an dem Hindernis vorbei vorliegt, und anhand des Vorliegens eines freien Fahrwegs und der Lenkwinkeldifferenzen zu entscheiden, ob wenigstens eine vorbestimmte Maßnahme gemäß dem oben beschriebenen Verfahren auszulösen ist oder nicht.

Hierbei kann die wenigstens eine Sensoreinheit beispielsweise eine LIDAR-Einheit umfassen und/oder es kann sich um ein manuell geführtes Flurförderzeug handeln, also ein Flurförderzeug, welches unmittelbar von einer Bedienperson gesteuert wird. Wenngleich ein entsprechendes erfindungsgemäßes Verfahren prinzipiell ebenfalls in autonomen oder halbautonomen Fahrzeugen zum Einsatz kommen könnte, so spielt dort das hier zugrunde gelegte Konzept einer beabsichtigten Annäherung an ein Hindernis vor einem entsprechenden Gegenlenken nur eine untergeordnete Rolle, da bei einer Planung eines Fahrwegs in einem autonomen Fahrzeug der beabsichtigte Fahrweg der entsprechenden Steuereinheit jeweils stets bekannt sein sollte.

Weitere Merkmale und Vorteile der vorliegenden Erfindung werden aus der nachfolgenden Beschreibung einer Ausführungsform davon und insbesondere von verschiedenen Betriebssituationen eines entsprechenden Flurförderzeugs noch deutlicher, wenn diese zusammen mit den beiliegenden Figuren betrachtet wird. Diese zeigen im Einzelnen:
- Figuren 1 bis 3: erläuternde schematische Darstellungen zur Verdeutlichung von möglichen Betriebssituationen während eines Betriebs eines erfindungsgemäßen Flurförderzeugs; und
- Figuren 4 bis 8: erläuternde schematische Darstellungen zur Verdeutlichung von Betriebssituationen des Flurförderzeugs aus den Figuren 1 bis 3 beim Einfahren in eine Gasse.

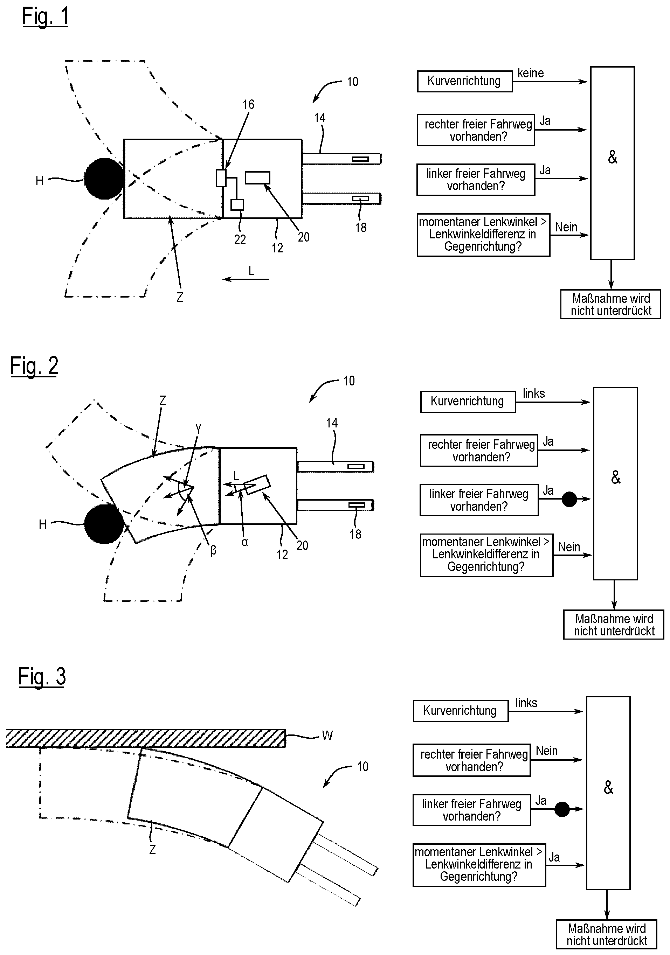

Die Figuren 1 bis 3 zeigen zunächst in einer schematischen Draufsicht unterschiedliche Betriebssituationen eines erfindungsgemäßen Flurförderzeugs 10, wobei in den Figuren 1 und 2 jeweils ein freistehendes Hindernis H unmittelbar vor bzw. schräg vor dem Flurförderzeug 10 vorliegt, während in Figur 3 in der Umgebung des Flurförderzeugs 10 bzw. auf seiner momentanen extrapolierten Bahnkurve eine Wand W befindlich ist.

Hierbei weist das Flurförderzeug 10 einen Fahrzeugkörper 12 und ein Lastaufnahmemittel 14 auf, auf welchem eine hier nicht dargestellte Last transportiert werden kann. Zudem umfasst das Flurförderzeug 10 eine Sensoreinheit 16, welche an der Vorderseite des Flurförderzeugs 10 gemäß der Hauptfahrrichtung L angeordnet ist, und beispielsweise einen Winkelbereich von wenigstens 180° abdecken kann. Ferner umfasst das Flurförderzeug 10 ein Paar von im Bereich des Lastaufnahmemittels 14 angeordneten ungelenkten Rädern 18 sowie ein gelenktes Antriebsrad 20. Im hier dargestellten Fall handelt es sich bei dem Flurförderzeug 10 um ein manuell geführtes Flurförderzeug, welches zum Transport von Objekten in Logistikeinrichtungen vorgesehen und eingerichtet ist. Zu diesem Zweck umfasst es ferner eine lediglich schematisch dargestellte Steuereinheit 22 sowie nicht weiter gezeigte Geschwindigkeits- und Lenkwinkelsensoren, welche ihre Daten ebenso wie die Sensoreinheit 16 an die Steuereinheit 22 liefern. Einige der hier genannten Komponenten des Flurförderzeugs 10 sind aus Gründen der Übersichtlichkeit lediglich in manchen der Figuren dargestellt, es versteht sich jedoch, dass das Flurförderzeug 10 in sämtlichen Figuren jeweils dasselbe ist.

Des Weiteren ist in den Figuren 1 bis 3 jeweils eine Schutzzone Z des Flurförderzeugs 10 dargestellt, welche anhand der momentanen Geschwindigkeit des Flurförderzeugs 10 sowie des momentanen Lenkwinkels α des Fahrzeugs 10 bezogen auf die Hauptfahrrichtung L bestimmt wird. Hierbei fährt das Flurförderzeug 10 in Figur 1 momentan geradeaus, so dass der Lenkwinkel α aktuell 0° beträgt, während es in den Figuren 2 und 3 jeweils Linkskurven mit einem bestimmten momentanen Lenkwinkel α ausführt.

Ferner sind in den Figuren 1 bis 3 in gestrichelten Linien jeweils mögliche freie Fahrwege bzw. Ausweichwege an dem Hindernis H bzw. der Wand W vorbei eingezeichnet, welche ein Passieren des entsprechenden Hindernisses H bzw. der Wand W mit einem minimalen Abstand gerade noch ermöglichen. Während in den Figuren 1 und 2 jeweils linke und rechte freie Fahrwege vorliegen, existiert in der Betriebssituation aus Figur 3 lediglich ein linker freier Fahrweg, da die Wand W ein Ausweichen nach rechts nicht zulässt. Die entsprechenden linken und rechten freien Fahrwege entsprechen hierbei rechten und linken Lenkwinkeldifferenzen zu dem momentanen Lenkwinkel α, mittels welcher dem Hindernis jeweils gerade noch ausgewichen werden kann, und sind mit β und γ bezeichnet. Dementsprechend ist festzuhalten, dass die beiden Winkel β und γ jeweils gegenüber dem momentanen Lenkwinkel α und dieser wiederum bezüglich der Hauptfahr- oder Geradeausfahrrichtung L zu betrachten sind.

Mittels des erfindungsgemäßen Verfahrens kann nun bestimmt werden, ob eine vorbestimmte Maßnahme zur Vermeidung der Hindernisse H bzw. der Wand W auszulösen ist, also insbesondere ein Verringern der momentanen und/oder maximalen Geschwindigkeit des Flurförderzeugs, ein Ausgeben einer entsprechenden Mitteilung an die Bedienperson des Flurförderzeugs 10 oder gar ein automatisierter Lenkeingriff.

Im Rahmen des erfindungsgemäßen Verfahrens wird in sämtlichen Situationen aus den Figuren 1 bis 3 davon ausgegangen, dass die Einleitung einer entsprechenden vorbestimmten Maßnahme notwendig sein wird, da in den Figuren 1 und 2 jeweils direkt auf das freistehende Hindernis H zugefahren wird und dementsprechend keine Anstalten gemacht werden, diesem auszuweichen, während in der Figur 3 der eingeschlagene Lenkwinkel zu gering ist und demzufolge von einer Kollision mit der Wand W ausgegangen werden muss.

Die entsprechenden Eingabedaten zur Bestimmung, ob die wenigstens eine vorbestimmte Maßnahme auszulösen ist, sowie das hierauf basierende Vorgehen sind ebenfalls in den Figuren 1 bis 3 schematisch anhand eines Schaubilds dargestellt, also insbesondere, ob eine Rechts- oder Linkskurve gefahren wird, ob ein rechter und/oder linker Ausweichweg gefunden wird, und ob ein entsprechender Lenkwinkel größer oder kleiner als eine zugehörige Lenkwinkeldifferenz ist. Hierbei ergeben die entsprechenden Auswertungen jeweils, dass ein Unterdrücken der wenigstens einen vorbestimmten Maßnahme nicht stattzufinden hat, da die erfindungsgemäße Kombination von Bedingungen nicht erfüllt ist, woraufhin die entsprechende Maßnahme auszulösen ist.

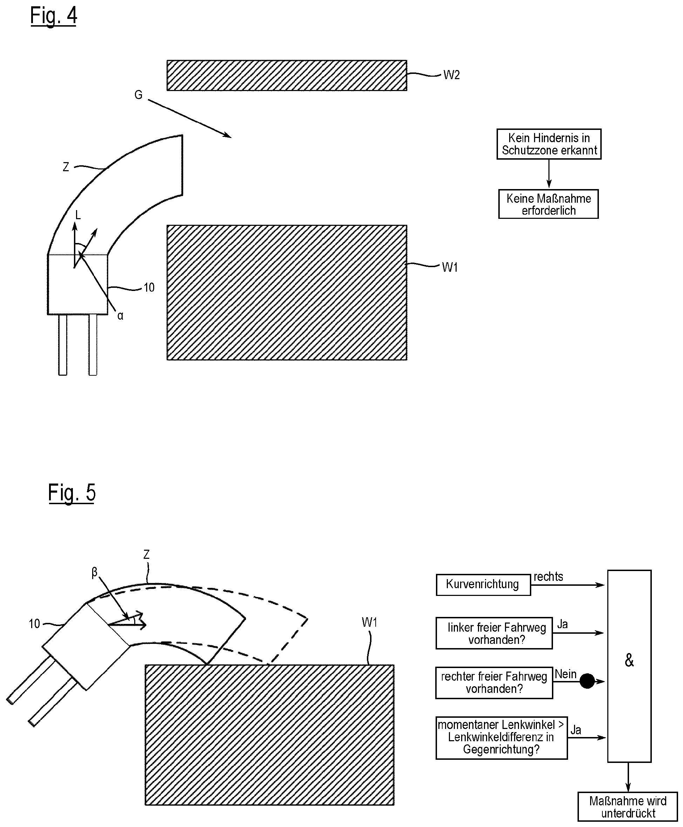

Demhingegen sind in den Figuren 4 bis 8 jeweilige Betriebssituationen beim Einfahren in einen Gang G durch das Flurförderzeug 10 gezeigt, welcher an seinen rechten und linken Seiten jeweils durch eine rechte Wand W1 und eine zweite Wand W2 begrenzt ist. Hierbei beginnt das Flurförderzeug 10 in Figur 4 gerade mit seiner Einfahrt in die Gasse G, d.h. das gelenkte Rad 20 weist momentan einen Lenkwinkel auf, welcher eine Rechtskurve des Flurförderzeugs 10 in die Gasse G hinein auslösen wird. Da jedoch momentan in der Schutzzone Z noch kein Hindernis vorliegt, besteht in diesem Fall auch noch keine Notwendigkeit zur Überprüfung, ob eine vorbestimmte Maßnahme zur Hindernisbehandlung ausgelöst werden müsste.

Demhingegen hat in Figur 5 das Flurförderzeug 10 bereits einen Teil der kurvenförmigen Bahnkurve zur Einfahrt in die Gasse G durchlaufen und das Schutzfeld Z kommt in diesem Moment zum ersten Mal in Kontakt mit der rechten Wand W1 der Gasse G. Hierbei wird in Figur 5 von einem Lenkwinkel α von 30° ausgegangen, während gleichzeitig festgestellt wird, dass ein linker Ausweichweg existiert und eine linke Lenkwinkeldifferenz β lediglich 10° zu betragen hat, wie durch den gestrichelten Umriss in Figur 5 angedeutet. Dementsprechend ist der momentane Lenkwinkel α nach rechts größer als die festgestellte linke Lenkwinkeldifferenz β und das Auslösen der vorbestimmte Maßnahme wird erfindungsgemäß unterdrückt, da es sich hierbei definitionsgemäß um eine normale Betriebssituation des Flurförderzeugs 10 handelt und davon ausgegangen wird, dass die Bedienperson des Flurförderzeugs 10 die Lenkung rechtzeitig wieder geradestellen wird, sodass es nicht zu einer Kollision mit der Wand W1 kommen wird.

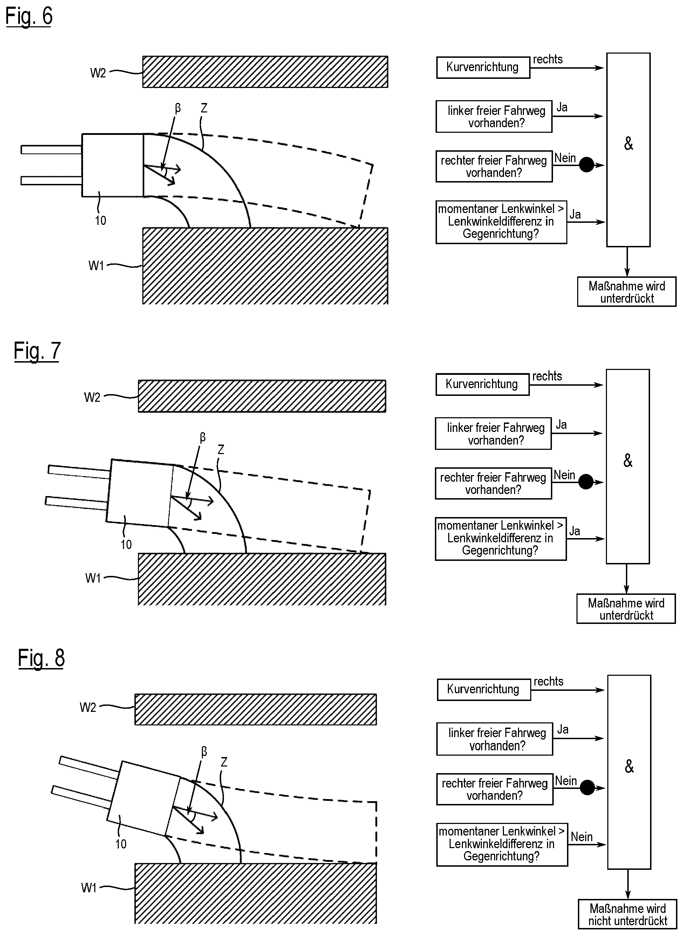

Auch in der in Figur 6 gezeigten Situation, in welcher das Flurförderzeug 10 nunmehr im Wesentlichen parallel zu den Wänden W1 und W2 hinsichtlich seiner Hauptfahrrichtung L ausgerichtet ist, wird die wenigstens eine vorbestimmte Maßnahme weiterhin unterdrückt, da der ermittelte linke Ausweichwinkel β von 20° weiterhin kleiner ist als der momentane Lenkwinkel α von 30° und demzufolge die Bedingungen zum Unterdrücken der vorbestimmten Maßnahme weiterhin erfüllt sind.

Demhingegen stellt nunmehr Figur 7 den Grenzfall dar, in welchem der momentane Lenkwinkel α weiterhin 30° beträgt, jedoch der linke Ausweichwinkel β gerade auch 30° beträgt. Sollte demzufolge in dieser Situation die Bedienperson des Flurförderzeugs 10 nicht unmittelbar eine Gegenmaßnahme und insbesondere ein Gegenlenken nach links einleiten, so wird der Fall aus Figur 8 eintreten, in welchem der linke Ausweichwinkel β nunmehr 35° beträgt, während der momentane Lenkwinkel α weiterhin 30° beträgt, sodass an dieser Stelle die Bedingung zur Unterdrückung der wenigstens einen vorbestimmten Maßnahme nicht mehr gegeben ist und diese demzufolge ausgelöst werden wird.

Demzufolge lässt sich aus den Figuren 4 bis 8 nachvollziehen, dass eine normale gesteuerte Einfahrt in eine Gasse G möglich ist, ohne dass die wenigstens eine vorbestimmte Maßnahme ausgelöst wird, während lediglich dann, wenn die Bedienperson des Flurförderzeugs 10 es versäumt, das Fahrzeug rechtzeitig wieder geradezustellen bzw. gegenzulenken, ab einem gewissen Zeitpunkt die vorbestimmte Maßnahme ausgelöst werden wird, wobei dieser Zeitpunkt von der momentanen Geschwindigkeit des Flurförderzeugs 10 abhängt, da diese sowohl in die Abmessungen der Schutzzone Z als auch in die Ermittlung des freien Fahrwegs nach links eingegangen ist.

## Patentansprüche

1. Verfahren zur Hindernisbehandlung in einem Flurförderzeug (10), welches wenigstens eine Sensoreinheit (16) umfasst, welche in Hauptfahrrichtung (L) des Flurförderzeugs (10) angeordnet und dazu eingerichtet ist, in einem vorbestimmen Winkelbereich Hindernisse (H, W, W1, W2) erfassen zu können, das Verfahren umfassend:
- Erfassen einer momentanen Geschwindigkeit und eines momentanen Lenkwinkels (α) nach rechts oder links von wenigstens einem gelenkten Rad (20) des Flurförderzeugs (10) mittels eines Geschwindigkeitssensors bzw. eines Lenkwinkelsensors des Flurförderzeugs (10);
- Berechnen einer Schutzzone (Z) anhand der momentanen Geschwindigkeit und des momentanen Lenkwinkels;
- Auswerten der von der wenigstens einen Sensoreinheit (16) gelieferten Daten innerhalb der Schutzzone (Z) des Flurförderzeugs (10);
das Verfahren **dadurch gekennzeichnet, dass** es ferner umfasst:
- bei Feststellen eines Hindernisses (H, W, W1, W2) in der Schutzzone (Z):
∘ Ermitteln einer rechten und einer linken Lenkwinkeldifferenz (γ, β) zu dem momentanen Lenkwinkel (α), mittels welcher dem Hindernis (H, W, W1, W2) jeweils ausgewichen werden kann oder Ermitteln einer rechten oder linken Lenkwinkeldifferenz (γ, β) zu dem momentanen Lenkwinkel (α), mittels welcher dem Hindernis (H, W, W1, W2) ausgewichen werden kann, in Richtung der Geradeausfahrrichtung, je nachdem ob ein momentaner Lenkwinkel (α) nach links oder rechts vorliegt;
∘ Unterdrücken wenigstens einer vorbestimmten Maßnahme, wenn:
▪ ein momentaner Lenkwinkel (α) nach rechts vorliegt und der momentane Lenkwinkel (α) nach rechts größer oder gleich der linken Lenkwinkeldifferenz (β) ist; oder
▪ ein momentaner Lenkwinkel (α) nach links vorliegt und der momentane Lenkwinkel (α) nach links größer oder gleich der rechten Lenkwinkeldifferenz ist (γ);
∘ ansonsten: Auslösen der wenigstens einen vorbestimmten Maßnahme.

2. Verfahren nach Anspruch 1,
ferner umfassend ein Bewerten, ob ein möglicher freier Fahrweg rechts oder links an dem Hindernis (H, W, W1, W2) vorbei vorliegt, anhand der momentanen Geschwindigkeit und einer vorbestimmten Zeitspanne,
wobei die vorbestimmte Maßnahme nur unterdrückt wird, wenn bei einem momentanen Lenkwinkel (α) nach rechts zusätzlich ein linker freier Fahrweg vorliegt bzw. wenn bei einem momentanen Lenkwinkel (α) nach links zusätzlich ein rechter freier Fahrweg vorliegt.

3. Verfahren nach Anspruch 1 oder 2,
wobei die wenigstens eine vorbestimmte Maßnahme ein Verringern der momentanen und/oder einer maximalen Geschwindigkeit des Flurförderzeugs (10) umfasst.

4. Verfahren nach einem der vorhergehenden Ansprüche,
wobei die wenigstens eine vorbestimmte Maßnahme ein Ausgeben einer entsprechenden Mitteilung an eine Bedienperson umfasst.

5. Verfahren nach einem der vorhergehenden Ansprüche,
wobei die wenigstens eine vorbestimmte Maßnahme einen Lenkeingriff zum Ausweichen des Hindernisses (H, W, W1, W2) umfasst.

6. Verfahren nach einem der vorhergehenden Ansprüche,
wobei das Ermitteln der rechten und linken Lenkwinkeldifferenz (γ, β) und/oder das Bewerten des möglichen freien Fahrwegs ein Berücksichtigen von geometrischen Abmessungen des Flurförderzeugs (10) und/oder einer davon getragenen Last umfasst.

7. Flurförderzeug (10), **dadurch gekennzeichnet, dass** es dazu eingerichtet ist, ein Verfahren nach einem der vorhergehenden Ansprüche während seines Betriebs auszuführen, umfassend:
- einen Fahrzeugkörper (12);
- wenigstens eine Sensoreinheit (16), welche in Hauptfahrrichtung (L) des Flurförderzeugs (10) angeordnet und dazu eingerichtet ist, in einem vorbestimmtem Winkelbereich Hindernisse (H, W, W1, W2) erfassen zu können;
- einen Geschwindigkeitssensor und einen Lenkwinkelsensor; und
- eine Steuereinheit (22), welche dazu eingerichtet ist:
∘ Daten von dem Geschwindigkeitssensor und dem Lenkwinkelsensor zu erhalten;
∘ eine Schutzzone (Z) zu berechnen;
∘ eine rechten und eine linke Lenkwinkeldifferenz (γ, β) zu dem momentanen Lenkwinkel (α) zu ermitteln, mittels welcher einem in der Schutzzone (Z) erfassten Hindernis (H, W, W1, W2) jeweils ausgewichen werden kann;
∘ zu bewerten, ob ein möglicher freier Fahrweg rechts oder links an dem Hindernis (H, W, W1, W2) vorbei vorliegt; und
∘ anhand des Vorliegens eines freien Fahrwegs und der Lenkwinkeldifferenzen (γ, β) zu entscheiden, ob wenigstens eine vorbestimmte Maßnahme auszulösen oder zu unterdrücken ist.

8. Flurförderzeug (10) nach dem vorhergehenden Anspruch,
wobei die wenigstens eine Sensoreinheit (16) eine LIDAR-Einheit umfasst.

9. Flurförderzeug (10) nach einem der Ansprüche 7 und 8,
wobei es sich um ein manuell geführtes Flurförderzeug (10) handelt.

## Claims

1. Method for obstacle handling in an industrial truck (10), which comprises at least one sensor unit (16), which is arranged in the main travel direction (L) of the industrial truck (10) and is configured to be able to detect obstacles (H, W, W1, W2) within a predetermined angular range, the method comprising:
- detecting a current speed and a current steering angle (α) to the right or left of at least one steered wheel (20) of the industrial truck (10) by means of a speed sensor or a steering angle sensor of the industrial truck (10);
- calculating a protective zone (Z) on the basis of the current speed and the current steering angle;
- evaluating the data supplied by the at least one sensor unit (16) within the protective zone (Z) of the industrial truck (10);
the method being **characterized in that** it further comprises:
- upon determining an obstacle (H, W, W1, W2) in the protective zone (Z):
∘ determining a right and a left steering angle difference (γ, β) relative to the current steering angle (α), by means of which the obstacle (H, W, W1, W2) can respectively be avoided, or determining a right or left steering angle difference (γ, β) relative to the current steering angle (α), by means of which the obstacle (H, W, W1, W2) can be avoided, in direction of the straight-ahead direction, depending on whether a current steering angle (α) to the left or to the right is present;
∘ suppressing at least one predetermined measure, when:
▪ a current steering angle (α) to the right is present and the current steering angle (α) to the right is greater than or equal to the left steering angle difference (β); or
▪ a current steering angle (α) to the left is present and the current steering angle (α) to the left is greater than or equal to the right steering angle difference (γ);
∘ otherwise: triggering the at least one predetermined measure.

2. Method according to claim 1,
further comprising assessing whether a possible free travel path to the right or to the left past the obstacle (H, W, W1, W2) is present, on the basis of the current speed and a predetermined time period,
wherein the predetermined measure is suppressed only if, in the case of a current steering angle (α) to the right, a left free travel path is additionally present, or if, in the case of a current steering angle (α) to the left, a right free travel path is additionally present.

3. Method according to claim 1 or 2,
wherein the at least one predetermined measure comprises reducing the current speed and/or a maximum speed of the industrial truck (10).

4. Method according to any one of the preceding claims,
wherein the at least one predetermined measure comprises outputting a corresponding notification to an operator.

5. Method according to any one of the preceding claims,
wherein the at least one predetermined measure comprises a steering intervention for avoiding the obstacle (H, W, W1, W2).

6. Method according to any one of the preceding claims,
wherein the determining of the right and left steering angle difference (γ, β) and/or the assessing of the possible free travel path comprises considering geometric dimensions of the industrial truck (10) and/or a load carried thereby.

7. Industrial truck (10), **characterized in that** it is configured to carry out a method according to any one of the preceding claims during its operation, comprising:
- a vehicle body (12);
- at least one sensor unit (16), which is arranged in the main travel direction (L) of the industrial truck (10) and is configured to be able to detect obstacles (H, W, W1, W2) within a predetermined angular range;
- a speed sensor and a steering angle sensor; and
- a control unit (22), which is configured to:
∘ receive data from the speed sensor and the steering angle sensor;
∘ calculate a protective zone (Z);
∘ determine a right and a left steering angle difference (γ, β) relative to the current steering angle (α), by means of which an obstacle (H, W, W1, W2) detected in the protective zone (Z) can respectively be avoided;
∘ assess whether a possible free travel path to the right or to the left past the obstacle (H, W, W1, W2) is present; and
∘ decide, on the basis of the presence of a free travel path and the steering angle differences (γ, β), whether at least one predetermined measure is to be triggered or suppressed.

8. Industrial truck (10) according to the preceding claim,
wherein the at least one sensor unit (16) comprises a LIDAR unit.

9. Industrial truck (10) according to any one of claims 7 and 8,
wherein it is a manually operated industrial truck (10).

## Revendications

1. Un procédé de gestion des obstacles dans un chariot de manutention (10) comprenant au moins une unité de capteur (16) qui est disposée dans la direction de déplacement principale (L) du chariot de manutention (10) et qui est conçue pour détecter des obstacles (H, W, W1, W2) dans une plage angulaire prédéterminée, le procédé comprenant :
- la détection d'une vitesse actuelle et d'un angle de braquage actuel (α) vers la droite ou vers la gauche d'au moins une roue dirigée (20) du chariot de manutention (10) au moyen d'un capteur de vitesse ou respectivement d'un capteur d'angle de braquage du chariot de manutention (10) ;
- le calcul d'une zone de protection (Z) à partir de la vitesse actuelle et de l'angle de braquage actuel ;
- l'analyse des données fournies par ladite au moins une unité de capteur (16) à l'intérieur de la zone de protection (Z) du chariot de manutention (10) ;
le procédé étant **caractérisé en ce qu'**il comprend en outre :
- en cas de détection d'un obstacle (H, W, W1, W2) dans la zone de protection (Z) :
∘ la détermination d'une différence d'angle de braquage à droite et à gauche (γ, β) par rapport à l'angle de braquage actuel (α), au moyen de laquelle l'obstacle (H, W, W1, W2) peut être contourné; ou la détermination d'une différence d'angle de braquage à droite ou à gauche (γ, β) par rapport à l'angle de braquage actuel (α), au moyen de laquelle l'obstacle (H, W, W1, W2) peut être contourné, dans la direction de la marche en ligne droite, selon qu'il existe un angle de braquage actuel (α) vers la gauche ou vers la droite ;
∘ la suppression d'au moins une mesure prédéterminée si :
• un angle de braquage actuel (α) vers la droite est présent et l'angle de braquage actuel (α) vers la droite est supérieur ou égal à la différence d'angle de braquage à gauche (β) ; ou
• un angle de braquage actuel (α) vers la gauche est présent et l'angle de braquage actuel (α) vers la gauche est supérieur ou égal à la différence d'angle de braquage à droite (γ) ;
∘ sinon : déclenchement de ladite au moins une mesure prédéterminée.

2. Le procédé selon la revendication 1,
comprenant en outre une évaluation visant à déterminer s'il existe un éventuel espace libre de circulation à droite ou à gauche de l'obstacle (H, W, W1, W2), sur la base de la vitesse actuelle et d'un intervalle de temps prédéterminé,
dans lequel la mesure prédéterminée n'est supprimée que si, pour un angle de braquage actuel (α) vers la droite, il existe en outre un espace libre de circulation à gauche, ou si, pour un angle de braquage actuel (α) vers la gauche, il existe en outre un espace libre de circulation à droite.

3. Le procédé selon la revendication 1 ou 2,
dans lequel ladite au moins une mesure prédéterminée comprend une réduction de la vitesse actuelle et/ou de la vitesse maximale du chariot de manutention (10).

4. Le procédé selon l'une des revendications précédentes,
dans lequel ladite au moins une mesure prédéterminée comprend l'émission d'un message correspondant à un opérateur.

5. Le procédé selon l'une des revendications précédentes,
dans lequel ladite au moins une mesure prédéterminée comprend une intervention sur la direction pour éviter l'obstacle (H, W, W1, W2).

6. Le procédé selon l'une des revendications précédentes,
dans lequel la détermination de la différence d'angle de braquage à droite et à gauche (γ, β) et/ou l'évaluation de la trajectoire libre possible comprend la prise en compte des dimensions géométriques du chariot de manutention (10) et/ou d'une charge transportée par celui-ci.

7. Un chariot de manutention (10), **caractérisé en ce qu'**il est adapté pour exécuter un procédé selon l'une des revendications précédentes pendant son fonctionnement, comprenant :
- un châssis (12),
- au moins une unité de capteur (16), qui est disposée dans la direction de déplacement principale (L) du chariot de manutention (10) et est adaptée pour pouvoir détecter des obstacles (H, W, W1, W2) dans une plage angulaire prédéterminée ;
- un capteur de vitesse et un capteur d'angle de braquage ; et
- une unité de commande (22) qui est adaptée pour :
∘ recevoir des données provenant du capteur de vitesse et du capteur d'angle de braquage ;
∘ calculer une zone de protection (Z);
∘ déterminer une différence d'angle de braquage à droite et à gauche (γ, β) par rapport à l'angle de braquage actuel (α), au moyen de laquelle il est possible d'éviter respectivement un obstacle (H, W, W1, W2) détecté dans la zone de protection (Z) ;
∘ évaluer s'il existe une voie de circulation libre possible à droite ou à gauche de l'obstacle (H, W, W1, W2) ; et
∘ décider, sur la base de l'existence d'une voie de circulation libre et des différences d'angle de braquage (γ, β), s'il convient de déclencher ou de supprimer au moins une mesure prédéterminée.

8. Le chariot de manutention (10) selon la revendication précédente,
dans lequel ladite au moins une unité de capteur (16) comprend une unité LIDAR.

9. Le chariot de manutention (10) selon l'une des revendications 7 et 8,
dans lequel il s'agit d'un chariot de manutention (10) à conduite manuelle.
